(19) Europäisches Patentamt
European Patent Office
Office européen des brevets

(11) Publication number: 0 294 195 B1

(12) # EUROPEAN PATENT SPECIFICATION

(45) Date of publication of patent specification: **24.11.93**

(51) Int. Cl.[5]: **C08L 79/08**

(21) Application number: **88305033.8**

(22) Date of filing: **02.06.88**

(54) **Polyimide resin composition.**

(30) Priority: **05.06.87 JP 140041/87**
**16.12.87 JP 316101/87**

(43) Date of publication of application:
**07.12.88 Bulletin 88/49**

(45) Publication of the grant of the patent:
**24.11.93 Bulletin 93/47**

(84) Designated Contracting States:
**CH DE FR GB IT LI NL**

(56) References cited:
**EP-A- 0 251 741**
**EP-A- 0 267 289**
**WO-A-87/01378**
**US-A- 4 225 686**

**D. Wilson et al., Polyimides, Blackie & Son Ltd., Glasgow and London, 1990, pages 16 and 17**

(73) Proprietor: **MITSUI TOATSU CHEMICALS, Inc.**
**2-5 Kasumigaseki 3-chome**
**Chiyoda-Ku Tokyo 100(JP)**

(72) Inventor: **Ohta, Masahiro**
**1541, Yabe-cho**
**Totsuka-ku**
**Yokohama-shi Kanagawa(JP)**
Inventor: **Tamai, Shoji**
**2882, Iijima-cho**
**Sakae-ku**
**Yokohama-shi Kanagawa(JP)**
Inventor: **Kawashima, Saburo**
**4-37-14, Oyabe**
**Yokosuka-shi Kanagawa(JP)**
Inventor: **Oikawa, Hideaki**
**2070, Iijima-cho**
**Sakae-ku**
**Yokohama-shi Kanagawa(JP)**
Inventor: **Yamaguchi, Akihiro**
**1-13-24, Zaimokuza**
**Kamakura-shi Kanagawa(JP)**
Inventor: **Iiyama, Katsuaki**
**582-3, Kamonomiya**
**Odawara-shi Kanagawa(JP)**

(74) Representative: **Hayward, Denis Edward Peter et al**
**Lloyd Wise, Tregear & Co.**
**Norman House**
**105-109 Strand**
**London WC2R 0AE (GB)**

EP 0 294 195 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a resin composition for moulded articles and more particularly, a polyimide resin composition for the same use which is stable at high temperatures, and has improved heat resistance, chemical resistance, mechanical strength and moldability.

Polyimides obtained by reacting the dianhydride of a tetracarboxylic acid with a diamine not only have high temperature stability, but also are excellent in mechanical strength and distortion resistance, and have good flame retardant and electrical insulative properties. Thus, they are now used for appliances and equipment in the fields of electrical engineering/electronics, aerospace vehicles and transportation, and in the future are expected to the be widely employed in high temperature applications.

A variety of polyimides having excellent characteristics have been developed.

The polyimide, however, has both merits and demerits with respect to its characteristics. For example, it is good in heat resistance, but it does not have a definitive glass transition temperature, and so must be processed, if used as a material to be moulded, e.g., by sintering-moulding. Polyetherimides are good in processability, but poor in heat and solvent resistance because they have a low glass transition temperature and are soluble in halogenated hydrocarbons.

The inventors have found a polyimide that has excellent mechanical, thermal and electrical characteristics, and possesses solvent, resistance and heat resistance, which comprises recurring units represented by the formula:

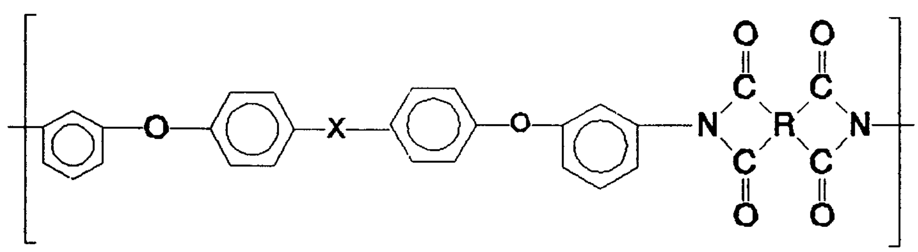

where X indicates a direct bond or is a radical selected from divalent hydrocarbon radicals having 1 to 10 carbon atoms, isopropylidene hexafluoride, carbonyl, thio and sulfonyl, and R is a tetravalent radical selected from aliphatic radicals having at least 2 carbon atoms, cycloaliphatic radicals, monocyclic aromatic radicals, fused polycyclic aromatic radicals, and polycyclic aromatic radicals in which the aromatic rings are interconnected by a direct bond or through a bridging group; and, for example, disclosed in Japanese Laid-open Patent Specifications Nos. 14378/1986, 68817/1987 and 86021/1987, and in Japanese Patent Applications Nos. 076475/1986 and 274206/1986.

Further, the inventors have found another polyimide excellent in mechanical, thermal and electrical characteristics, and having solvent resistance and heat resistance, which comprises recurring units represented by the formula:

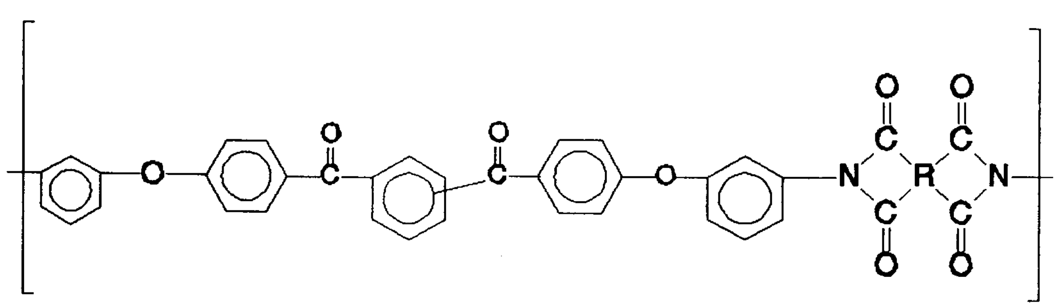

where R is a tetravalent radical selected from aliphatic radicals having at least 2 carbon atoms, cycloaliphatic radicals, monocyclic aromatic radicals, fused polycyclic aromatic radicals, and polycyclic aromatic radicals wherein the aromatic rings are interconnected by a direct bond or through a bridging

group, (for example, as in Japanese Laid-open Patent Specification No. 50372/1987).

On the other hand, in the electronics field, there is a requirement for still higher heat resistance.

Also, the aerospace industry has a continuing need for reduction in weight coupled with improved strength, in addition to high heat resistance.

The polyimides as above-mentioned are thermoplastic resins having heat resistance, good mouldability and their own favourable physical properties. Their heat resistance ad mechanical strnegth, however, are not good enough compared with those of a commercially-available aromatic polyamideimide such as TORLON® (Amoco Chemicals Corp., USA).

In US-A-4225686 there is disclosed the blending of certain aromatic copolyamideimides with certain specific copolyimides. This is said to improve the elongation and tear strength of films made from the blends as compared with those of either of the copolymers taken alone. Also, the softening point is higher than that of the polyamideimide alone.

It is an object of the invention to provide a polyimide resin composition having improved heat resistance and/or mechanical strength in addition to its other intrinsic favourable properties.

In accordance with the present invention, there is provided a resin composition which comprises, as a first component, 99.9 to 50% by weight of a polyimide consisting essentially of recurring units represented by the general formula:

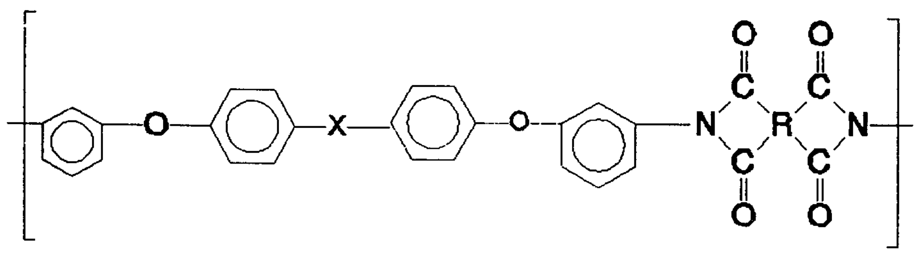

where X indicates a direct bond or is

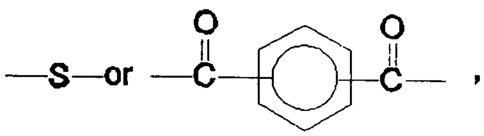

and R is an aliphatic radical having at least 2 carbon atoms, a cycloaliphatic radical, a monocyclic aromatic radical, a fused polycyclic aromatic radical, or a polycyclic aromatic radical wherein the aromatic rings are interconnected by a direct bond or through a bridging group, and,
as a second component, 0.1 to 50% by weight of an aromatic polyamideimide different from the polyimide of the first component and consisting essentially of recurring units of the formula:

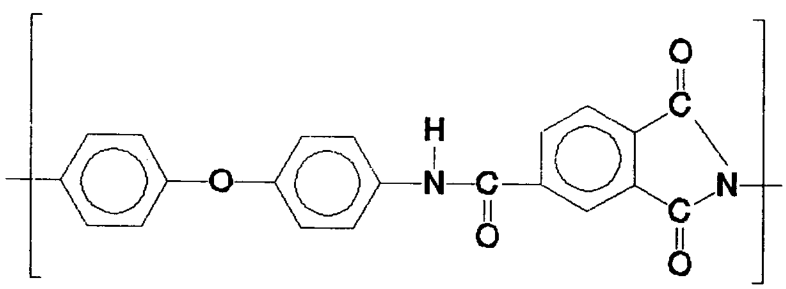

and/or the formula

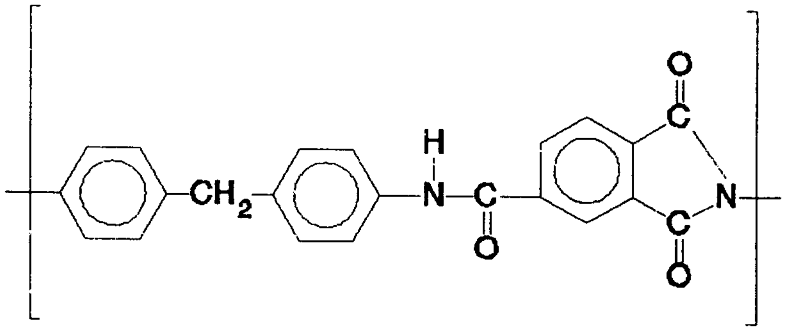

The preparation of polyimides for use in the composition of the invention can be carried out, for example, by the process disclosed in the above-mentioned Japanese Laid-open Patent Specification No,. 143478/1986, which comprises reacting an ether diamine represented by formula:

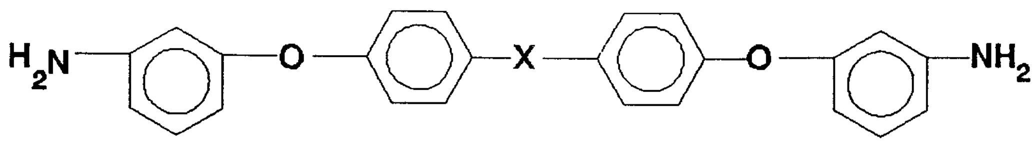

where X is the same as defined above,
with at least one tetracarboxylic dianhydride.

Examples of diamines for use in this way are 4,4'-bis(3-aminophenoxy)biphenyl; bis[4-(3-aminophenoxy)phenyl]sulfide; 1,4-bis[4-(3-aminophenoxy)benzoyl]benzene; and 1,3-bis[4-(3-aminophenoxy)-benzoyl]benzene.

A diamine other than the above-mentioned ether diamines can be used in admixture therewith provided the amount used is not enough to impair the desired physical properties of the polyimide. Examples of such diamines are as follows: m-phenylenediamine, o-phenylenediamine, p-phenylenediamine, m-aminobenzylamine, p-aminobenzylamine, bis(3-aminophenyl)ether, (3-aminophenyl)(4-aminophenyl)ether, bis(4-aminophenyl)ether, bis(3-aminophenyl)sulfide, (3-aminophenyl)(4-aminophenyl)sulfide, bis(4-aminophenyl)-sulfide, bis(4-aminophenyl)sulfide, bis(3-aminophenyl)sulfoxide, (3-aminophenyl)(4-aminophenyl)sulfoxide, bis(4-aminophenyl)sulfoxide,bis(3-aminophenyl)sulfone, (3-aminophenyl)(4-aminophenyl)sulfone, bis(4-aminophenyl)sulfone, 3,3'-diaminobenzophenone, 3,4'-diaminobenzophenone, 4,4'-diaminobenzophenone, bis[4-(3-aminophenoxy)phenyl]methane, bis[4-(4-aminophenoxy)phenyl]methane, 1,1-bis[4-(3-aminophenoxy)phenyl]ethane, 1,1-bis[4-(4-aminophenoxy)phenyl]ethane, 1,2-bis[4-(3-aminophenoxy)-phenyl]ethane, 1,2-bis[4-(4-aminophenoxy)phenyl]ethane, 2,2-bis[4-(3-aminophenoxy)phenyl]propane, 2,2-bis[4-(4-aminophenoxy)phenyl]propane, 2,2-bis[4-(3-aminophenoxy)phenyl]butane, 2,2-bis[4-(4-aminophenoxy)phenyl]butane, 2,2-bis[4-(3-aminophenoxy)phenyl]-1,1,1,3,3,3-hexafluoropropane, 2,2-bis[4-(4-aminophenoxy)phenyl]-1,1,1,3,3,3-hexafluoropropane, 1,3-bis(3-aminophenoxy)benzene, 1,3-bis(4-aminophenoxy)benzene, 1,4-bis(3-aminophenoxy)benzene, 1,4-bis(4-aminophenoxy)benzene, 4,4'-bis(4-aminophenoxy)biphenyl, bis[4-(3-aminophenoxy)phenyl]ketone, bis[4-(4-aminophenoxy)phenyl]ketone, bis[4-(4-aminophenoxy)phenyl]sulfide, bis[4-(4-aminophenoxy)phenyl]sulfoxide, bis[4-(3-aminophenoxy)phenyl]-sulfone, bis[4-(4-aminophenoxy)phenyl]sulfone, bis[4-(3-aminophenoxy)phenyl]ether, bis[4-(4-aminophenoxy)phenyl]ether, etc.

Tetracarboxylic dianhydrides for use in the preparation of polyimides for the composition of the invention are represented by formula:

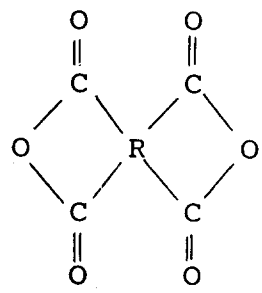

where R is the same as above-stated, and typical examples of these are ethylenetetracarboxylic acid dianhydride, butanetetracarboxylic acid dianhydride, cyclopentanetetracarboxylic acid dianhydride, pyromellitic dianhydride, 3,3',4,4'-benzophenonetetracarboxylic acid dianhydride, 2,2',3,3'-benzophenonetetracarboxylic acid dianhydride, 3,3',4,4'-biphenyltetracarboxylic dianhydride, 2,2',3,3'-biphenyltetracarboxylic acid dianhydride, 2,2-bis(3,4-dicarboxyphenyl)propane dianhydride, 2,2-bis(2,3-dicarboxyphenyl)propane dianhydride, bis(3,4-dicarboxyphenyl)ether dianhydride, bis(3,4-dicarboxyphenyl)sulfone dianhydride, 1,1-bis-(3,4-dicarboxyphenyl)ethane dianhydride, bis(2,3-dicarboxyphenyl)methane dianhydride, bis(3,4-dicarboxyphenyl)methane dianhydride, 4,4'-(p-phenylenedioxy)diphthalic acid dianhydride, 4,4'-(m-phenylenedioxy)-diphthalic acid dianhydride, 2,3,6,7-naphthalenetetracarboxylic acid dianhydride, 1,4,5,8-naphthalenetetracarboxylic acid dianhydride, 1,2,5,6-naphthalenetetracarboxylic acid dianhydride, 1,2,3,4-benzenetetracarboxylic acid dianhydride, 3,4,9,10-perylenetetracarboxylic acid dianhydride, 2,3,6,7-anthracenetetracarboxylic acid dianhydride, and 1,2,7,8-phenanthrenetetracarboxylic acid dianhydride. These may be used alone or in a combination of two or more.

Particularly preferred radicals represented by R as defined above are:

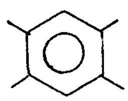 , 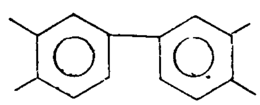 , 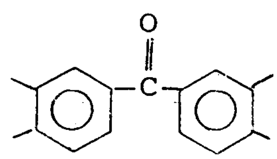

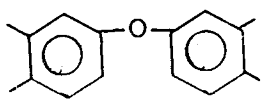 and 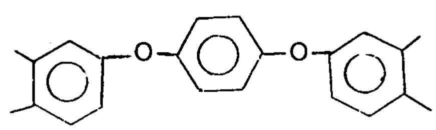

An example of an aromatic polyamideimide which is suitable for the said second component is commercially-available under the trade name, TORLON® (Amoco Chemicals Corp., USA).

The resin composition according to the invention is composed of the above-mentioned polyimide in an amount of from 99.9 to 50% by weight, and the aromatic polyamideimide in an amount of from 0.1 to 50% by weight, the sum amounting to 100% by weight.

The resin composition according to the invention consisting of the polyimide and the aromatic polyamineimide can be achieved with only a small content of the latter to give the desired improvement in heat resistance and/or mechanical strength. The lower limit of the latter is 0.1 % by weight, preferably 0.5 % by weight.

However, aromatic polyamideimides have a very high melt viscosity compared with conventional thermoplastic resins, and therefore, too much aromatic polyamideimide in the resin composition produces unfavorable results, i.e., the mouldability of the polyimide falls to an intolerable level, with also a decrease in elongation at break. Thus the maximum content of aromatic polyamideimide is limited, and is 50 % by weight or less.

The resin composition according to the invention can be prepared by known methods, for example:

(1) Polyimide powder and aromatic polyamideimide powder are blended by mixing and/or kneading by means of a mortar, Henshel mixer, drum blender, tumbler blender, ball mill or ribbon blender to obtain the desired powder.

(2) Polyimide powder is dissolved or suspended in an organic solvent. To the solution or suspension, the aromatic polyamideimide is added, and uniformly dispersed or dissolved. Then the solvent is removed to obtain the desired powder.

(3) The aromatic polyamideimide is dissolved or suspended in a solution of a polyamide acid, in an organic solvent, which is the precursor of the polyimide, and then the precursor is converted into the imide by heating to 100 to 400 ° C or by one of the usual imidization agents. Then the solvent is removed to obtain the desired powder.

The thus-obtained powdery polyimide composition can be subjected, preferably after melt-blending, to various moulding processes, for example, injection, compression, transfer or extrusion molding. In the preparation of the resin composition, a simple and effective method is to melt-blend the two components in the form of powders or pellets or one component in the form of powder and the other component in the form of pellets.

The melt-blending can be accomplished by the usual means used for blending rubbers or plastics, such as a hot roll, Banbury mixer, Brabender or extruder. The melt temperature should be set within the temperature range where the mixture can be caused to melt without thermal decomposition, usually 280 to 420 ° C, preferably 300 to 400 ° C.

For molding the resin composition of the invention, injection and extrusion moulding permitting formation of a uniform melt-blend with high productivity are preferred. Additionally, transfer, compression or sintering molding, or film extrusion, may be employed.

The resin composition of the invention may include as an additive at least one solid lubricant, such as molybdenum disulfide, graphite, boron nitride, lead monoxide, lead powder, etc. and at least one reinforcement, such as glass fibres, carbon fibres, aromatic polyamide fibres, silicon carbide fibres, potassium titanate fibres, glass beads, etc.

The resin composition may also contain one or more of the usual additives selected from antioxidants, thermal stabilizers, ultraviolet ray absorbers, fire retardants, fire-retardant-activity enhancing agents, antistatic agents, lubricants, coloring agents, etc.

The invention will now be described more fully by way of synthesis examples, composition Examples and comparative Examples:

Synthesis 1

In a reaction flask fitted with a stirrer, a reflux condenser and a nitrogen introducing tube were placed 3.66 kg (10 mols) of 4,4'-bis(3-aminophenoxy)biphenyl and 52.15 kg of N,N-dimethylacetoamide, followed by the addition of 2.11 kg (9.7 mols) of pyromellitic dianhydride at room temperature under a nitrogen atmosphere with care taken to prevent rise of the temperature of the solution. Then stirring was continued at room temperature for about 20 hours.

Into the polyamide acid solution thus obtained, 2.20 kg (20 mols) of triethylamine and 3.06 kg (30 mols) of acetic anhydride were dripped at room temperature under a nitrogen atmosphere. After 20 hours' stirring, there was produced a yellow slurry, which was filtered off to yield a light yellow polyimide powder. To the resultant powder, methanol was added to produce a sludge, which was filtered off and dried at 180 ° C under reduced pressure for 8 hours to yield 5.36 kg of polyimide powder.

The thus-obtained polyimide powder had a logarithmic viscosity of 0.50 dl/g, as determined by the following procedure: the polyimide powder (0.5 g) was disolved in 100 ml of solvent with heating, then allowed to cool to 35 ° C and measured, the solvent being a mixture of p-chlorophenol and phenol (90:10 parts/parts by weight).

The glass transition temperature of the powder was 256 ° C as measured according to DSC and the thermal decomposition temperature 5 % at 560 ° C as measured according to DTA-TG.

Syntheses 2 to 4

With different diamines and different tetracarboxylic dianhydrides in varying combinations powders of various polyimides were obtained by the same process as described in Synthesis 1.

Table 1 gives a summary of Syntheses 1 to 4 which includes the kinds and quantities of the starting materials used and the logarithmic viscosities of the produced polyimide powders.

Table 1

| | Diamine<br>Name, kg (mol) | Tetracarboxylic dianhydride<br>Name, kg (mol) | Logarithmic viscosity (dl/g) |
|---|---|---|---|
| Synthesis 1 | 4,4'-bis(3-aminophenoxy)biphenyl<br>3,68 kg (10 mol) | Pyromellitic dianhydride<br>2.11kg (9.7 mol) | 0.50 |
| Synthesis 2 | 4,4'-bis(3-aminophenoxy)biphenyl<br>3.68 kg (10 mol) | 4,4'-(p-phenylenedioxy)diphthalic dianhydride<br>3.92 kg (9.75 mol) | 0.52 |
| Synthesis 3 | Bis[4-(3-aminophenoxy)phenyl]sulfide<br>4.0 kg (10 mol) | Pyromellitic dianhydride<br>2.11 kg (9.7 mol) | 0.49 |
| Synthesis 4 | Bis[4-(3-aminophenoxy)phenyl]sulfide<br>4.0 kg (10 mol) | 3,3',4,4'-biphenyltetracarboxylic dianhydride<br>2.87 kg (9.7 mol) | 0.50 |

<u>Synthesis 5</u>

In a reaction flask, similar to that used in Synthesis 1, were placed 5 kg (10 mols) of 1,3-bis[4-(3-aminophenoxy)benzoyl]benzene and 40.1 kg of N,N-dimethylacetamide, and the mixture cooled to about

0°C, after which 5 portions (a total of 2,082 kg (9.55 mols)) of pyromellitic dianhydride were added in succession under a nitrogen atmosphere with care taken to prevent rise of the temperature of the solution. Stirring was continued for about 2 hours. Subsequently the solution was cooled to room temeprature, followed by about 20 hours' further stirring under a nitrogen atmosphere.

Into the polyamide acid solution thus obtained 2,20 kg (20 mols) of triethylamine and 2.55 kg (25 mols) acetic anhydride were dripped at room temperature under a nitrogen atmosphere. After 20 hours' stirring, there was produced a yellow slurry, which was filtered off to yield a light yellow polyimide powder. To the resultant powder, methanol was added to produce a sludge, which was filtered off and dried at 150°C under reduced pressure for 8 hours to obtain 6.5 kg (yield: about 97.5 %) of light yellow polyimide powder. The glass transition temperature of this powder was 235°C as measured according DSC, and the logarithmic viscosity was 0.53 dl/g.

Syntheses 6 to 9

With different diamines and different tetracarboxylic acid dianhydrides in varying combinations, powders of various polyimides were obtained by the same process as described in Synthesis 5. Table 2 gives a summary of Syntheses 5 to 9 which includes the kinds and quantities of the starting materials and the logarithmic viscosities of the obtained polyimide powders.

Table 2

| | Diamine<br>Name, kg (mol) | Tetracarboxylic dianhydride<br>Name, kg (mol) | Logarithmic viscosity<br>(dl/g) |
|---|---|---|---|
| Synthesis 5 | 1,3-bis[4-(3-amino-phenoxy)benzoyl]benzene<br>5 kg (10 mol) | Pyromellitic dianhydride<br>2.082 kg (9.55 mol) | 0.53 |
| Synthesis 6 | 1,3-bis[4-(3-amino-phenoxy)benzoyl]benzene<br>4.75 kg (9.5 mol)<br>Bis(4-aminophenyl)ether<br>0.101 kg (0.5 mol) | 3,3',4,4'-benzophenon-tetracarboxylic<br>3,05 kg (9.52 mol) | 0.51 |
| Synthesis 7 | 1,4-bis[4-(3-amino-phenoxy)benzoyl]benzene<br>5.0 kg (10 mol) | 3,3',4,4'-biphenyl-tetracarboxylic dianhydride<br>2.81 kg (9.55 mol) | 0.52 |
| Synthesis 8 | 1,4-bis[4-(3-amino-phenoxy)benzoyl]benzene<br>2.5 kg (5 mol)<br>4,4'-bis(3-amino-phenoxy) biphenyl<br>1.84 kg (5 mol) | Pyromellitic dianhydride<br>2.07 kg (9.5 mol) | 0.49 |
| Synthesis 9 | 1,4-bis[4-(3-amino-phenoxy)benzoyl]benzene<br>4.25 kg (8.5 mol)<br>Bis(4-aminophenyl)ether<br>0.303 kg (1.5 mol) | Bis(3,4-dicarboxy-phenyl)ether dianhydride<br>2.93 kg (9.45 mol) | 0.45 |

Composition Examples 1 to 25

Dry-blends of the various polyimide powders obtained in the Syntheses 1 to 9 with a commercially available aromatic polyamideimide powder TORLON 4203L® (Amoco Chemicals Corp., USA), in the varying

compositions summarized in Tables 3 to 8, were extruded, with simultaneous melting, mixing and kneading, to form uniformly-blended pellets.

Subsequently, the thus-obtained uniformly-blended pellets were moulded in an injection moulding machine (Arburg All-Round A-20) with a metal-mould temperature of 220 °C and a barrel temperature of 380 to 400 °C. The molded test pieces were measured for their physical and thermal properties.

The results obtained are given in Tables 3 to 8.

The Tables include individual minimum injection moulding pressures as well.

The data in the Tables were obtained as follows: tensile strength and elongation at break according to ASTM D-638, bending strength and bending modulus of elasticity according to ASTM D-790, Izod impact value according to D-256, and heat distortion temperature according to ASTM D-648.

Comparative Examples 1 to 6

With other compositions outside the scope of the invention and in the same way as in Composition Examples 1 to 25, moulded products were obtained and the results of measurement of their physical and thermal properties are given in Tables 3 to 8.

Table 3

| | Polyimide Product | Polyimide Amount | Aromatic polyamide-imide TORLON 4203L Amount | Minimum injection pressure ($kg/cm^2$) * | Tensile strength ($kg/cm^2$) | Elongation at break (%) | Bending strength ($kg/cm^2$) | Bending modulus of elasticity ($kg/cm^2$) | Notched Izod impact value (kg-cm/cm) | Heat distortion temperature (°C) (18.6 $kg/cm^2$) |
|---|---|---|---|---|---|---|---|---|---|---|
| Example 1 | Product of Synthesis 1 | 95 | 5 | 460 | 1250 | 98 | 1620 | 34500 | 18.3 | 240 |
| Example 2 | | 85 | 15 | 465 | 1440 | 95 | 1770 | 37400 | 17.9 | 250 |
| Example 3 | | 75 | 25 | 480 | 1530 | 93 | 1860 | 40000 | 17.6 | 258 |
| Example 4 | | 50 | 50 | 500 | 1730 | 81 | 2050 | 44000 | 17.0 | 268 |
| Comparative example 1 | | 100 | 0 | 460 | 1100 | 100 | 1530 | 32400 | 18.3 | 235 |
| Example 5 | Product of Synthesis 2 | 90 | 10 | 380 | 1390 | 10 | 1610 | 35400 | 12.5 | 198 |
| Example 6 | | 50 | 50 | 440 | 1710 | 10 | 2000 | 43600 | 13.0 | 254 |
| Comparative example 2 | | 100 | 0 | 380 | 1230 | 10 | 1450 | 32100 | 12.5 | 181 |

*: Lower melt viscosity, lower minimum injection pressure. The rest is the same.

Table 4

| | Polyimide | | Aromatic polyamide-imide TORLON 4203L | Minimum injection pressure | Tensile strength | Elongation at break | Bending strength | Bending modulus of elasticity | Notched Izod impact value | Heat distortion temperature |
|---|---|---|---|---|---|---|---|---|---|---|
| | Product | Amount | Amount | $(kg/cm^2)$ * | $(kg/cm^2)$ | (%) | $(kg/cm^2)$ | $(kg/cm^2)$ | (kg-cm/cm) | (°C) $(18.6\ kg/cm^2)$ |
| Example 7 | Product of Synthesis 3 | 90 | 10 | 430 | 1600 | 57 | 1700 | 28400 | 20.4 | 225 |
| Example 8 | | 75 | 25 | 445 | 1670 | 53 | 1820 | 32400 | 19.8 | 236 |
| Example 9 | | 50 | 50 | 485 | 1780 | 43 | 1970 | 38900 | 18.3 | 251 |
| Comparative example 3 | | 100 | 0 | 420 | 1550 | 60 | 1600 | 25500 | 21.0 | 215 |

Table 5

| | Polyimide | | Aromatic polyamide-imide TORLON 4203L | Minimum injection pressure | Tensile strength | Elongation at break | Bending strength | Bending modulus of elasticity | Notched Izod impact value | Heat distortion temperature (°C) |
|---|---|---|---|---|---|---|---|---|---|---|
| | Product | Amount | Amount | ($kg/cm^2$)* | ($kg/cm^2$) | (%) | ($kg/cm^2$) | ($kg/cm^2$) | (kg-cm/cm) | (18.6 $kg/cm^2$) |
| Example 10 | Product of Synthesis 4 | 85 | 15 | 420 | 1320 | 34 | 1500 | 26800 | 11.5 | 202 |
| Example 11 | | 50 | 50 | 450 | 1570 | 28 | 1800 | 37000 | 12.1 | 241 |
| Comparative example 4 | | 100 | 0 | 410 | 1150 | 35 | 1350 | 22000 | 11.0 | 185 |

Table 6

| | Polyimide | | Aromatic polyamide-imide TORLON 4203L | Minimum injection pressure | Tensile strength | Elongation at break | Bending strength | Bending modulus of elasticity | Notched Izod impct value | Heat distortion temperature (°C) |
|---|---|---|---|---|---|---|---|---|---|---|
| | Product | Amount | Amount | ($kg/cm^2$) * | ($kg/cm^2$) | (%) | ($kg/cm^2$) | ($kg/cm^2$) | (kg-cm/cm) | (18.6 $kg/cm^2$) |
| Example 12 | Product of Synthesis 5 | 95 | 5 | 310 | 1650 | 68 | 1990 | 38800 | 16.5 | 230 |
| Example 13 | | 85 | 15 | 320 | 1730 | 65 | 2030 | 41200 | 16.4 | 244 |
| Example 14 | | 75 | 25 | 330 | 1790 | 61 | 2070 | 42800 | 16.4 | 254 |
| Example 15 | | 50 | 50 | 360 | 1880 | 48 | 2120 | 45200 | 16.0 | 267 |
| Comparative example 5 | | 100 | 0 | 310 | 1600 | 70 | 1960 | 37500 | 16.5 | 220 |
| Comparative example 6 | | 0 | 100 | 610 | 1920 | 13 | 2150 | 47000 | 14.0 | 275 |

*: Lower melt viscosity, lower minimum injection pressure. The rest is the same.

Table 7

| | Polyimide | | Aromatic polyamide-imide TORLON 4203L | Minimum injection pressure | Tensile strength | Elongation at break | Bending strength | Bending modulus of elasticity | Notched Izod impact value | Heat distortion temperature (°C) |
|---|---|---|---|---|---|---|---|---|---|---|
| | Product | Amount | Amount | ($kg/cm^2$)* | ($kg/cm^2$) | (%) | ($kg/cm^2$) | ($kg/cm^2$) | (kg-cm/cm) | (18.6 $kg/cm^2$) |
| Example 16 | Product of Synthesis 6 | 90 | 10 | 365 | 1870 | 66 | 2020 | 40800 | 15.5 | 226 |
| Example 17 | | 75 | 25 | 380 | 1900 | 60 | 2070 | 41800 | 15.5 | 248 |
| Example 18 | | 50 | 50 | 405 | 1920 | 46 | 2130 | 45800 | 15.3 | 264 |
| Comparative example 7 | | 100 | 0 | 360 | 1850 | 68 | 1980 | 38000 | 15.5 | 204 |
| Example 19 | Product of Synthesis 7 | 85 | 15 | 335 | 1610 | 59 | 1870 | 41700 | 13.0 | 237 |
| Example 20 | | 50 | 50 | 380 | 1830 | 48 | 2070 | 44700 | 13.8 | 263 |
| Comparative example 8 | | 100 | 0 | 320 | 1400 | 60 | 1700 | 34500 | 12.5 | 210 |

Table 8

| | Polyimide Product | Polyimide Amount | Aromatic polyamide-imide TORLON 4203L Amount | Minimum injection pressure ($kg/cm^2$)* | Tesnsile strength ($kg/cm^2$) | Elongation at break (%) | Bending strength ($kg/cm^2$) | Bending modulus of elasticity ($kg/cm^2$) | Notched Izod impact value (kg-cm/cm) | Heat distortion temperature (°C) (18.6 $kg/cm^2$) |
|---|---|---|---|---|---|---|---|---|---|---|
| Example 21 | Product of Synthesis 8 | 90 | 10 | 425 | 1620 | 83 | 1870 | 39000 | 17.4 | 242 |
| Example 22 | Product of Synthesis 8 | 75 | 25 | 435 | 1730 | 80 | 1980 | 42400 | 17.2 | 254 |
| Example 23 | Product of Synthesis 8 | 50 | 50 | 460 | 1860 | 67 | 2090 | 45400 | 16.6 | 266 |
| Comparative example 9 | Product of Synthesis 8 | 100 | 0 | 420 | 1500 | 85 | 1750 | 35200 | 17.5 | 231 |
| Example 24 | Product of Synthesis 9 | 85 | 15 | 360 | 1560 | 64 | 1730 | 37000 | 12.5 | 230 |
| Example 25 | Product of Synthesis 9 | 50 | 50 | 400 | 1820 | 53 | 2020 | 43800 | 13.7 | 260 |
| Comparative example 10 | Product of Synthesis 9 | 100 | 0 | 350 | 1350 | 65 | 1460 | 30000 | 11.5 | 201 |

## Claims

**1.** A resin composition which comprises, as a first component, 99.9 to 50% by weight of a polyimide consisting essentially of recurring units represented by the general formula:

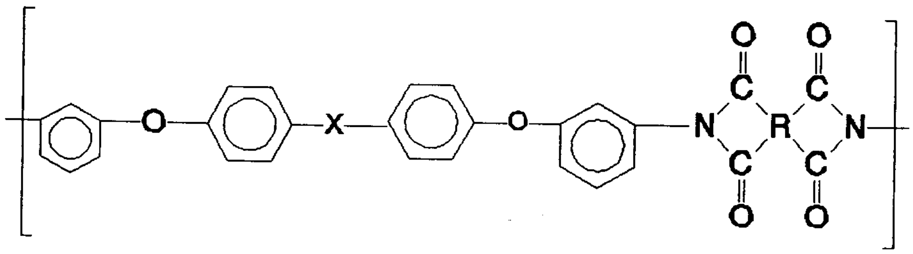

where X indicates a direct bond or is

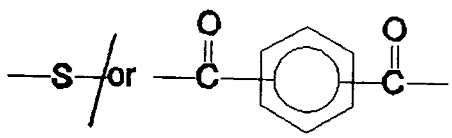

or

,

and R is an aliphatic radical having at least 2 carbon atoms, a cycloaliphatic radical, a monocyclic aromatic radical, a fused polycyclic aromatic radical, or a polycyclic aromatic radical wherein the aromatic rings are interconnected by a direct bond or through a bridging group,
and, as a second component, 0.1 to 50% by weight of an aromatic polyamideimide different from the polyimide of the first component and consisting essentially of recurring units of the formula:

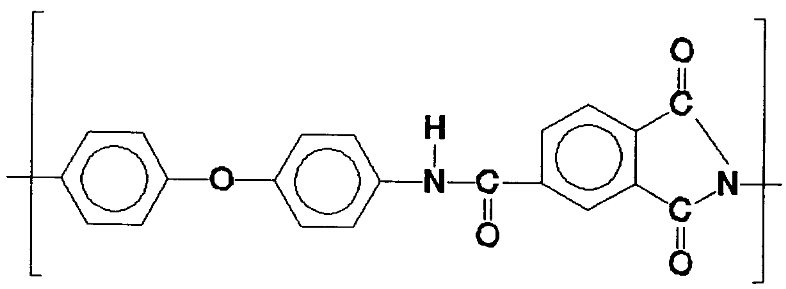

and/or the formula

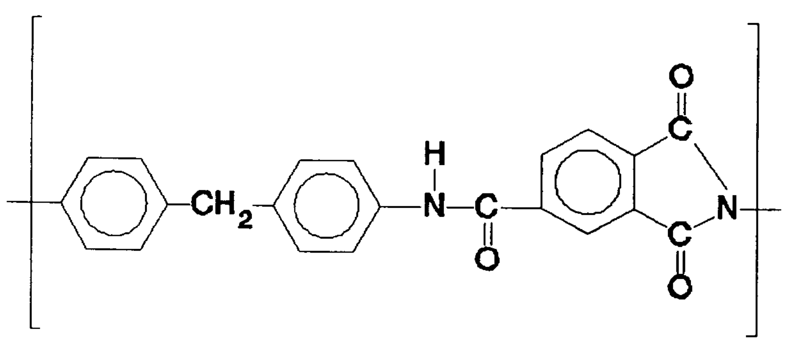

2. A resin composition as claimed in Claim 1 in which R is

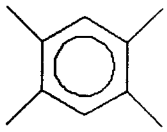 , 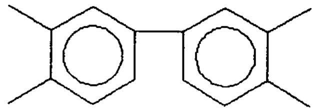 , 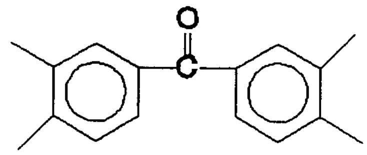

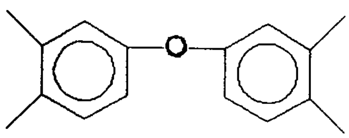 or 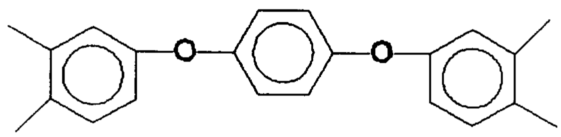

3. A resin composition as claimed in Claim 1 or Claim 2, in which the content of the said first component is from 99.5 to 50% by weight and the content of the said second component is from 0.5 to 50% by weight.

**Patentansprüche**

1. Harzzusammensetzung, enthaltend, als erste Komponente, 99,9 bis 50 Gew.-% eines Polyimids, das im wesentlichen aus wiederkehrenden Einheiten besteht, die durch die folgende allgemeine Formel dargestellt sind:

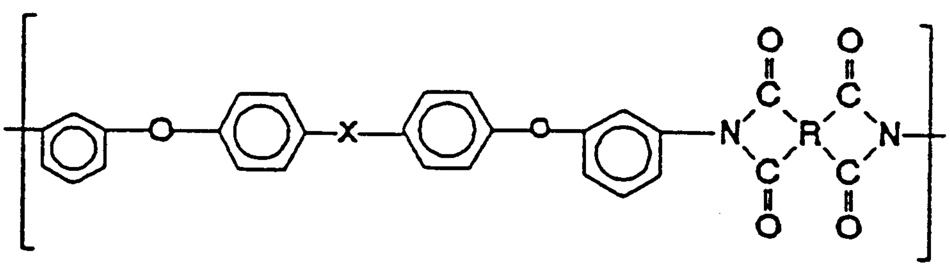 ,

worin X eine direkte Bindung darstellt, oder
-S- oder

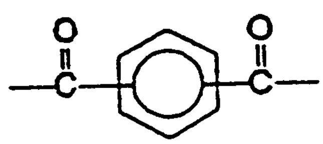

ist, und
R einen aliphatischen Rest mit mindestens 2 Kohlenstoffatomen, einen cycloaliphatischen Rest, einen monocyclischen aromatischen Rest, einen kondensierten polycyclischen aromatischen Rest oder einen polycyclischen aromatischen Rest, in welchen die aromatischen Ringe durch direkte eine direkte Bindung oder über eine Brückengruppe verbunden sind, bedeutet,
und, als zweite Komponente, 0,1 bis 50 Gew.-% eines aromatischen Polyamidimids, welches verschieden von dem die erste Komponente bildenden Polyimids ist, und welches im wesentlichen aus

wiederkehrenden Einheiten der Formel

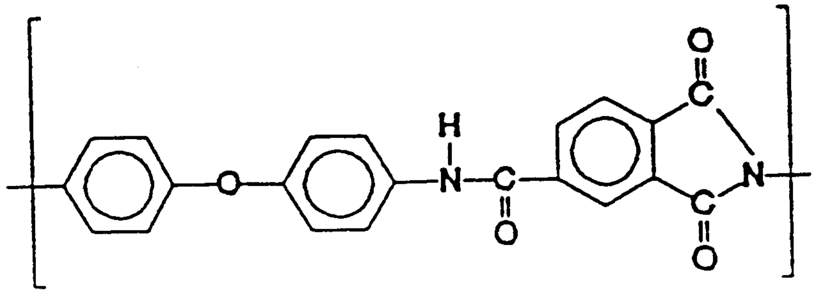

und/ oder der Formel

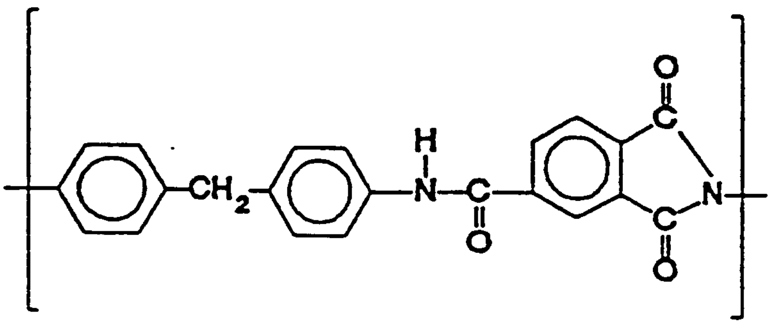

besteht.

2. Harzzusammensetzung gemäß Anspruch 1, in der R

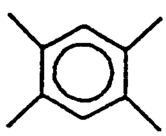 , 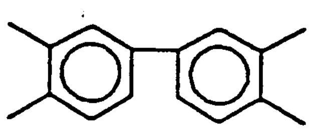 , 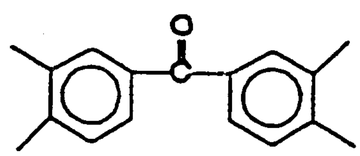

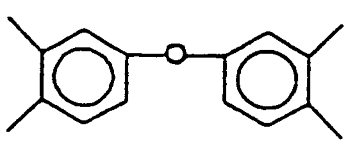 oder 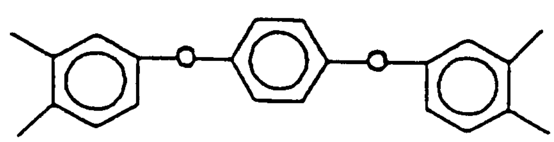

ist.

3. Harzzusammensetzung gemäß Anspruch 1 oder Anspruch 2, in der der Gehalt der ersten Komponente 99,5 bis 50 Gew.-% und der Gehalte der zweiten Komponente 0,5 bis 50 Gew.-% beträgt.

## Revendications

1. Une composition de résine qui comprend, comme premier composant, 99,9 à 50 % en poids d'un polyimide constitué essentiellement d'unités de récurrence représentées par la formule générale :

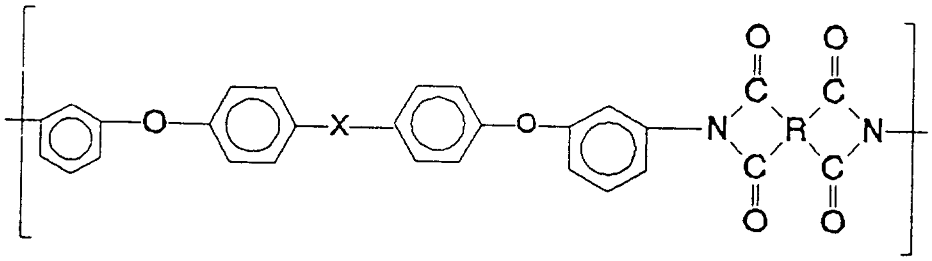

dans laquelle X indique une liaison directe ou un groupe

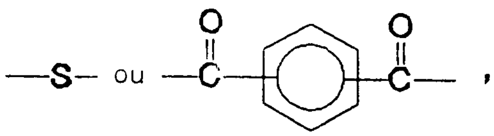

et R est un radical aliphatique ayant au moins deux atomes de carbone, un radical cycloaliphatique, un radical aromatique monocyclique, un radical aromatique polycyclique condensé, ou un radical aromatique polycyclique dans lequel les noyaux aromatiques sont interconnectés par une liaison directe ou par un groupe de pontage,
et, comme second composant, 0,1 à 50 % en poids d'un polyamide imide aromatique différent du polyimide du premier composant et constitué essentiellement d'unités de récurrence de formule :

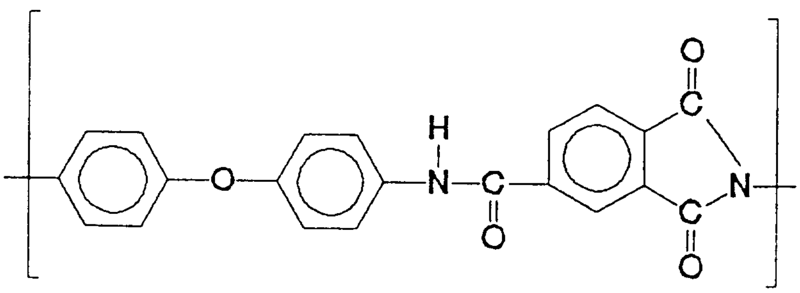

et/ou de formule

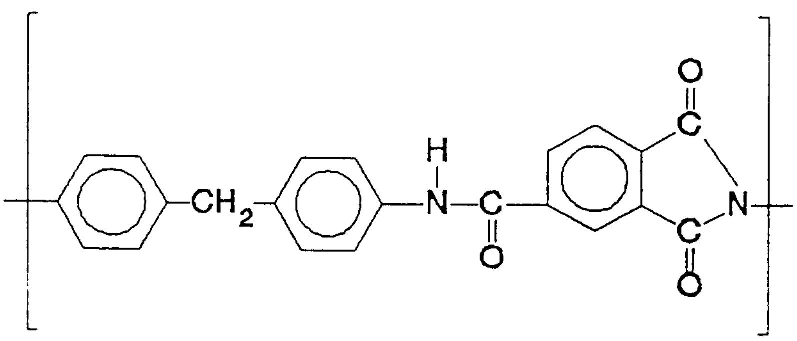

2. Une composition de résine selon la revendication 1, selon laquelle R est un groupe suivant

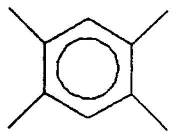 , 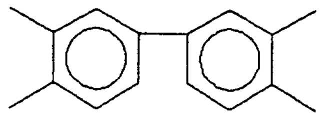 , 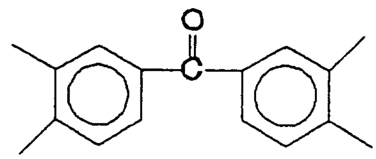

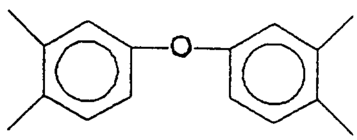 ou 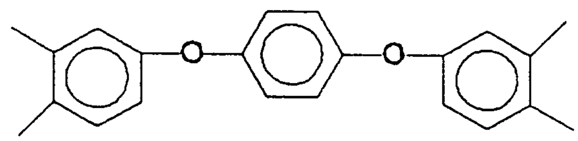

3. Une composition de résine selon la revendication 1 ou 2, selon laquelle la teneur en ce premier composant est de 99,5 à 50 % en poids et la teneur en ce second composant est de 0,5 à 50 % en poids.